# EUROPÄISCHE PATENTSCHRIFT

(11) **EP 0 651 547 B1**
(45) Veröffentlichungstag und Bekanntmachung des Hinweises auf die Patenterteilung: **02.07.2003**
(21) Anmeldenummer: 94116743.9
(22) Anmeldetag: 24.10.1994
(51) Int. Cl.: H04M 1/274

(54) **Verfahren zur Auswahl einer Rufnummer aus einem Rufnummernspeicher**
Method for selecting a call number from an electronic telephone directory
Procédé pour le choisi d'un numéro d'appel dans un répertoire téléphonique électronique

(30) Priorität: 28.10.1993 DE 4336791
(43) Veröffentlichungstag der Anmeldung: 03.05.1995
(73) Patentinhaber: GRUNDIG Aktiengesellschaft, 90471 Nürnberg (DE)
(72) Erfinder: Breitenbach, Andreas, GRUNDIG E.M.V., D-90748 Fürth (DE); Eibenberger, Konrad, GRUNDIG E.M.V., D-90748 Fürth (DE); Färber, Dietmar, GRUNDIG E.M.V., D-90748 Fürth (DE)

(56) Entgegenhaltungen:
- EP-A- 0 206 391
- DE-A- 2 933 477
- FR-A- 2 693 614
- NACHRICHTEN ELEKTRONIK, Bd. 34, Nr. 11, 1980, HEIDELBERG DE, Seiten 382-386, XP002024895 WESOLOWSKI: "EIN MIKROCOMPUTERGESTEUERTES TASTWAHLTELEFON"

## Beschreibung

Die Erfindung betrifft ein Verfahren zur Auswahl einer . Rufnummer nach dem Oberbegriff des Patentanspruchs 1 oder 2.

Aus der EP-B1-0 070 697 ist ein Wählautomat einer Teilnehmereinrichtung, welcher einen Strichcodeleser aufweist, bekannt. Durch den Strichcodeleser können Rufnummern eingelesen werden, wodurch ein Wählvorgang ohne Tastenbetätigung durchgeführt werden kann. Weiterhin kann in die Teilnehmereinrichtung durch den Strichcodeleser ein Steuerwort eingelesenwerden, das eine bestimmte Funktion auslöst. Dabei weist der Strichcode ein Code-Ende- und Code-Anfangs-Zeichen auf, wodurch die Leserichtung des Codes bestimmt werden kann.

Aus der EP-A2-01 64 718 ist ein Wählautomat für Teilnehmereinrichtungen bekannt, der für den Einsatz in verschiedenen Nachrichtennetzen geeignet ist. In einem Rufnummernspeicher des Wählautomaten werden nicht nur die Rufnummern, sondern auch die zeitliche Abfolge zur Signalisierung dieser Rufnummern im Nachrichtennetz gespeichert. Wird die Teilnehmereinrichtung beispielsweise in einem anderen Land mit einer unterschiedlichen Signalisierung im Nachrichtennetz betrieben, so muß für einen korrekten Betrieb der Teilnehmereinrichtung lediglich das Land ausgewählt werden, an dessen Nachrichtennetz die Teilnehmereinrichtung angeschlossen ist.

Aus der Veröffentlichung "Ein mikrocomputergesteuertes Tastwahltelefon" von H. Wesolowski, erschienen in nachrichten elektronik 34 (1980), Heft 11, S. 382 - 386 ist ein Leistungsmerkmal Kinderwahl bekannt. Bei diesem Leistungsmerkmal wird bei Abheben des Handapparats automatisch eine Rufnummer aus einem Speicher für Notrufnummern ausgelesen und über die Anschlußleitung ausgegeben. Das Leistungsmerkmal ist auch bei gesperrtem Telefon abrufbar, da der Gabelumschalter und der zur Sperre benutzte Schlüsselschalter durch die Kinderwahl überbrückt werden.

Aus DE-A1-29 334 77 ist eine Vorrichtung zur Speicherung von Daten in einem Fernsprechapparat offenbart. Die Vorrichtung zur Speicherung von Daten in einem Fernsprechapparat ist mit einer Anzahl von Speicherplätzen für Daten in Rufnummernformat und eine Anzeigevorrichtung für die in jeweils einem Speicherplatz enthaltenen Daten vorgesehen. Die einzelnen Speicherplätze, die Verbindungsmittel und die Anzeigevorrichtung sind derart ausgebildet, dass sie ausser den Daten in Rufnummernformat weitere numerische Daten in Format einer Zeitinformation sowie Codewörter und oder Zusatzdaten als Teildaten in Form eines geschlossenen Datensatzes aufnehmen bzw. übertragen. Diese Daten werden alle gemeinsam in einem einzigen Speicher gespeichert, ohne Sortierung.

Aus EP-A-0206391 ist ein Mikrocomputer gesteuerter Wahlwiederholer offenbart. Hierbei sind Telefonnummern und zugehörige Namen oder anders eine Telefonnummer charakterisierenden Daten im Speicher abgelegt. Durch Eingabe über eine Tasteneingabe, entweder des Namens, oder einer Telefonnummer charakterisierenden Zusatzinformation, ist eine Rufnummer auswählbar und wird gewählt.

Aus der EP-A2-0 454 387 ist eine Teilnehmereinrichtung mit den Leistungsmerkmalen Direktruf und Kurzwahl bekannt. Dabei ist für jedes Leistungsmerkmal ein eigener Rufnummernspeicher vorgesehen, der jeweils eine gewisse Anzahl Rufnummern speichert. Weiterhin ist eine Kennzeichnung der Rufnummern vorgesehen, mit denen keine Verbindung aufgebaut werden darf. Diese Kennzeichnung ist zusammen mit der Rufnummer abgespeichert.

Von Nachteil bei dieser Rufnummernspeicherung ist, daß zwei Rufnummernspeicher für die Leistungsmerkmale Direktruf und Kurzwahl benutzt werden. Weiterhin ist von Nachteil, daß zur Verwendung beispielsweise einer Kurzwahl-Rufnummer für andere Leistungsmerkmale der Benutzer die bereits im Kurzwahl-Rufnummernspeicher gespeicherte Rufnummer erneut in den entsprechenden Rufnummernspeicher eingeben muß. Dadurch wird zudem Speicherplatz verschwendet.

Der Erfindung liegt daher die Aufgabe zugrunde, eine Teilnehmereinrichtung derart auszugestalten, daß einmal abgespeicherte Rufnummern für beliebige Leistungsmerkmale zur Verfügung stehen und für den Benutzer die Bedienung vereinfacht wird.

Diese Aufgabe wird bei der erfindungsgemäßen Teilnehmereinrichtung durch die im Patentanspruch 1 oder 2 gekennzeichneten Merkmale gelöst.

Das erfindungsgemäße Verfahren weist den Vorteil auf, daß für alle gespeicherten Rufnummern eine Kennung abgespeichert wird, wodurch die Steuereinheit erkennt, welche Rufnummer für welches Leistungsmerkmal benutzt werden soll. Weiterhin ist es dadurch möglich, alle gespeicherten Rufnummern in einem zentralen Rufnummernspeicher abzuspeichern. Ein weiterer Vorteil besteht in der einfacheren Programmierung der Teilnehmereinrichtung. Um eine bereits für ein Leistungsmerkmal (z.B. elektronisches Notizbuch) gespeicherte Rufnummer für ein weiteres Leistungsmerkmal (z.B. Direktruf) auszuwählen, ist es nicht erforderlich, die Rufnummer erneut einzugeben. Weiterhin ist vorteilhaft, daß dadurch eine mehrfache Speicherung der gleichen Rufnummer für unterschiedliche Leistungsmerkmale vermieden wird. In der jeder Rufnummer zugeordneten Kennung wird gespeichert, für welche Leistungsmerkmale die Rufnummer benutzt werden kann. Dadurch ist eine Einsparung an Speicherplatz möglich.

Das erfindungsgemäße Verfahren nach Anspruch 2 weist den Vorteil auf, daß für jedes Leistungsmerkmal die Adresse der zu verwendenden Rufnummer in einem dem Leistungsmerkmal zugeordneten Speicherplatz abgespeichert ist und die Rufnummern einschließlich Zusatzinformationen in einem zentralen Rufnummernspeicher abgespeichert sind. Dadurch ist es ebenfalls nicht erforderlich, Rufnummern und zugehörige Zusatzinformationen mehrfach einzugeben und abzuspeichern, wodurch die Bedienung vereinfacht und Speicherplatz gespart wird.

Eine vorteilhafte Weiterbildung der erfindungsgemäßen Verfahren liegt in der Möglichkeit, sich die Speicherinhalte anzeigen lassen zu können.

Die Erfindung wird im folgenden anhand in der Zeichnung dargestellter Ausführungsformen näher beschrieben und erläutert. Es zeigen:
- Fig. 1: ein Blockschaltbild der erfindungsgemäßen Teilnehmereinrichtung,
- Fig. 2: die Belegung des Rufnummernspeichers zur Durchführung eines ersten erfindungsgemäßen Verfahrens und
- Fig. 3: die Belegung des Rufnummernspeichers zur Durchführung eines zweiten erfindungsgemäßen Verfahrens.

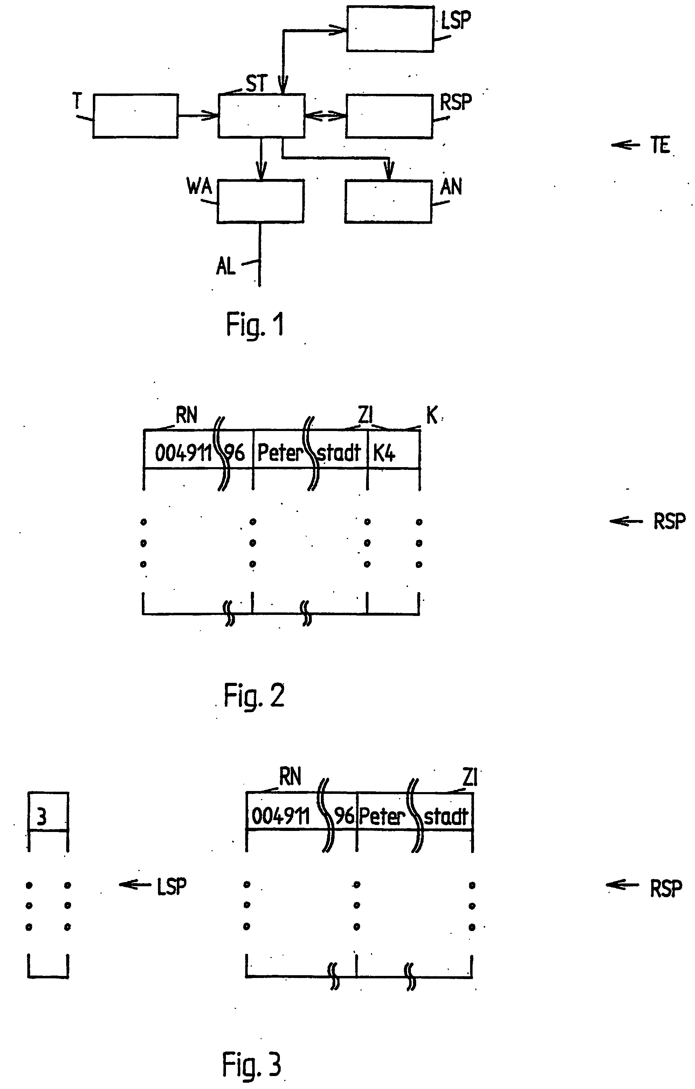

In Fig. 1 sind die für die Durchführung des Verfahrens erforderlichen Baugruppen der Teilnehmereinrichtung TE dargestellt. Zunächst ist es erforderlich, daß der Benutzer über die Tastatur T zumindest eine Rufnummer RN eingibt und im Rufnummernspeicher RSP abspeichert. Darüberhinaus kann der Benutzer auch noch Zusatzinformationen ZI zu dieser Rufnummer RN eingeben, wie beispielsweise den Namen und die Adresse des unter dieser Rufnummer RN erreichbaren Gesprächspartners. Als weitere Zusatzinformation ZI kann der Benutzer abspeichern, für welche Leistungsmerkmale eine Rufnummer RN zur Verfügung steht. Diese Information kann in einer für jede Rufnummer RN spezifischen Kennung K enthalten sein und wird zusammen mit der Rufnummer RN im Rufnummernspeicher RSP abgespeichert. Alternativ kann für jedes Leistungsmerkmal ein Speicherplatz vorgesehen sein, der die Adressen derjenigen Rufnummern RN des Rufnummernspeichers RSP enthält, die bei der Auswahl des Leistungsmerkmals verwendet werden sollen. Hierbei kann es sinnvoll sein, eine Beschränkung auf nur eine Rufnummer RN vorzusehen.

Somit besteht sowohl die Möglichkeit, jeder Rufnummer RN bestimmte Leistungsmerkmale als auch alternativ jedem Leistungsmerkmal bestimmte Rufnummern RN zuzuordnen.

Sind bereits mehrere Rufnummern RN einschließlich Zusatzinformation ZI im Rufnummernspeicher RSP abgespeichert, kann der Benutzer eine der Rufnummern RN einschließlich Zusatzinformation ZI auswählen, die durch die Steuereinheit ST auf der Anzeige AN angezeigt wird.

Die Auswahl einer Rufnummer RN kann dabei durch Eingabe von Zusatzinformation ZI, z.B. des Nachnamens erfolgen, oder es wird nacheinander jede im Rufnummernspeicher RSP gespeicherte Rufnummer RN einschließlich Zusatzinformation ZI angezeigt und der Benutzer wählt den zu ändernden Speicherbereich aus. Durch Betätigen entsprechender Tastschaltmittel T weist der Benutzer dieser Rufnummer RN anschließend ein oder auch mehrere Leistungsmerkmale zu. Dabei wird durch die Steuereinheit ST eine dem Leistungsmerkmal entsprechende Kennung K in der der Rufnummer RN zugeordneten Zusatinformation ZI abgespeichert und bei Auswahl dieser Rufnummer RN ebenfalls auf der Anzeige AN dargestellt.

Bei Zuordnung bestimmter Rufnummern RN zu jedem Leistungsmerkmal wird die Adresse der ausgewählten Rufnummer RN des Rufnummernspeichers RSP in dem jedem Leistungsmerkmal zugeordneten Speicher LSP abgespeichert.

Wird ein Leistungsmerkmal der Teilnehmereinrichtung TE von einem Benutzer ausgewählt, so liest die Steuereinheit ST zunächst die im Rufnummernspeicher RSP gespeicherten Kennungen K aus und vergleicht diese mit der Eingabe (z. B. dem Tastencode) des ausgewählten Leistungsmerkmals. Sobald die Steuereinheit ST aufgrund der Kennungen K feststellt, daß das ausgewählte Leistungsmerkmal einer Rufnummer RN zugeordnet ist, liest sie die übrige Zusatzinformation ZI und die Rufnummer RN aus dem Rufnummernspeicher RSP aus, stellt die Zusatzinformation ZI sowie die Rufnummer RN auf der Anzeige AN dar und leitet die Rufnummer RN an den Wählautomaten WA weiter.

Dieser erzeugt die entsprechenden Wählsignale und gibt sie über die Hauptanschlußleitung AL an das Nachrichtennetz weiter.

Bei Zuordnung bestimmter Rufnummern RN zu jedem Leistungsmerkmal wird bei Auswahl eines Leistungsmerkmals durch den Benutzer von der Steuereinheit ST der dem Leistungsmerkmal zugeordnete Speicher LSP ausgelesen. Dieser beinhaltet die Adresse der zu verwendenden Rufnummer RN, welche im Rufnummernspeicher RSP gespeichert ist. Nachdem die Steuereinheit ST die Rufnummer RN aus dem Rufnummernspeicher RSP ausgelesen hat, leitet sie diese zum Verbindungsaufbau an den Wählautomaten WA weiter.

Fig. 2 zeigt den Speicherinhalt des Rufnummernspeichers RSP für den Fall, daß einer Rufnummer RN die Leistungsmerkmale zugeordnet werden. Dieser beinhaltet für jede Rufnummer RN auch die ihr zugeordnete Zusatzinformation ZI. Die Zusatzinformation ZI wird auf der Anzeige AN ausgegeben und setzt sich aus einem durch die Steuereinheit ST nicht auswertbaren Teil und einem auswertbaren Teil zusammen. Der nicht auswertbare Teil dient ausschließlich der Darstellung auf der Anzeige AN, der auswertbare Teil der Zusatzinformaton ZI stellt -zusätzlich die Kennung K dar. Diese beinhaltet, für welche Leistungsmerkmale die zugehörige Rufnummer RN benutzt werden kann. Gegebenenfalls kann die abgespeicherte Kennung K, in Fig. 2: K4, noch für die Anzeige umcodiert werden, z.B. in: vierte Kurzwahl-Rufnunmer.

Bei der Programmierung der für eine Rufnummer RN zugelassenen Leistungsmerkmale ist es evtl. erforderlich, daß die Steuereinheit ST eine Plausibilitätsüberprüfung durchführt. Wird beispielsweise für eine Rufnummer RN das Leistungsmerkmal Babyruf eingegeben, überprüft die Steuereinheit ST die Kennungen K aller anderen Rufnummern RN und löscht gegebenenfalls dieses Leistungsmerkmal in der Kennung K einer anderen Rufnummer RN. Dadurch wird sichergestellt, daß für bestimmte Leistungsmerkmale nur eine Rufnummer RN ausgewählt ist. Außerdem kann dadurch verhindert werden, daß Rufnummern RN mehrmals einem Leistungsmerkmal zugeordnet werden, beispielsweise Kurzwahl 1 und Kurzwahl 19 für eine Rufnummer RN.

Besteht die Kennung K aus einem Byte, so sind 256 verschiedene Kennungen K kodierbar. Hierbei ist jedoch zu beachten, daß beispielsweise das Leistungsmerkmal Kurzwahl für 32 Rufnummern RN entsprechend 32 verschiedene Kennungen K benötigt. Da jedoch die anderen Leistungsmerkmale, wie beispielsweise Babyruf usw., nur eine Kennung benötigen, reicht ein Byte vollständig für die Kennung K aus, selbst wenn Kombinationen von Leistungsmerkmalen für eine Rufnummer RN möglich sind, wie beispielsweise gleichzeitige Auswahl von Direktruf und Rufweiterleitung.

Fig. 3 zeigt den Speicherinhalt des Rufnummernspeichers RSP und des Speichers LSP für den Fall, daß einem Leistungsmerkmal die Rufnummer RN zugeordnet wird. Im Speicher LSP ist jeder Speicherplatz einem Leistungsmerkmal fest zugeordnet. In jedem Speicherplatz. steht die Adresse der Rufnummer RN des Rufnummernspeichers RSP, welche zur Durchführung des Leistungsmerkmals benutzt werden soll. Im Rufnummernspeicher RSP ist die Rufnummer RN und die ihr zugeordnete Zusatzinformation ZI abgespeichert.

Bei der Programmierung der für ein Leistungsmerkmal ausgewählten Rufnummer RN wird die Adresse der Rufnummer RN in dem Speicherplatz des Speichers LSP gespeichert, der dem gewünschten Leistungsmerkmal zugeordnet ist. Hierbei ist es nicht erforderlich, zwei physikalisch getrennte Speicher LSP und RSP vorzusehen. Sie können durch einen in zwei Speicherbereiche aufgeteilten nichtflüchtigen'Halbleiterspeicher realisiert werden.

## Patentansprüche

1. Verfahren zur Auswahl einer Rufnummer aus einern Rufnummernspeicher (RSP) einer Teilnehmereinrichtung (TE), welche eine Eingabeeinheit (T) zur Eingabe von Rufnummern (RN) und zugehörigen Zusatzinformationen (ZI), eine Steuereinheit (ST) zur Steuerung der Teilnehmereinrichtung (TE) und einen Wählautomaten (WA) zur Ausgabe der Rufnummer (RN) auf die Hauptanschlussleitung (HL) aufweist,
**dadurch kennzeichnet, dass**
die jeder Rufnummer (RN) zugeordnete Zusatzinformation (ZI) eine Kennung (K) beinhaltet, welche festlegt, für welche Leistungsmerkmale der Teilnehmereinrichtung (TE) die jeweilige Rufnummer (RN) benutzt werden kann, diese Kennung (K) im Rufnummernspeicher (RSP) gespeichert wird und die Steuereinheit (ST) zur Ausführung eines Leistungsmerkmales anhand der Kennung (K) die zu benutzende Rufnummer (RN) und Zusatzinformation (ZI) ermittelt.

2. Verfahren zur Auswahl einer Rufnummer aus einem Rufnummernspeicher (RSP) einer Teilnehmereinrichtung (TE), welche eine Eingabeeinheit (T) zur Eingabe von Rufnummern (RN) und zugehörigen Zusatzinformation (ZI), eine Steuereinheit (ST) zur Steuerung der Teilnehmereinrichtung (TE) und einen Wählautomaten (WA) zur Ausgabe der Rufnummer (RN) auf die Hauptanschlussleitung (HL) aufweist,
**dadurch kennzeichnet, dass**
bei Auswahl eines Leistungsmerkmales die Steuereinheit (ST) aus einem dem Leistungsmerkmalen zugeordneten Speicher (LSP) die Adresse der im Rufnummernspeicher (RSP) gespeicherten Rufnummer (RN) ausliest, welche dem Leistungsmerkmal zugeordnet ist, die Steuereinheit (ST) anschließend die Rufnummer (RN) nach den Rufnummernspeicher (RSP) ausliest und dem Wählautomaten (WA) zum Verbindungsaufbau zuleitet.

3. Verfahren nach Anspruch 1 oder 2,
**dadurch gekennzeichnet, dass**
jeder Rufnummer (RN) mindestens eine Zusatzinformation (ZI) zugeordnet ist, welche zusammen mit der Rufnummer (RN) im Rufnummernspeicher (RSP) gespeichert wird, und die Zusatzinformation (ZI) und die ausgewählte Rufnummer (RN) auf der Anzeigeeinheit (AN) der Teilnehmereinrichtung (TE) angezeigt werden.

## Claims

1. Method for selecting a subscriber number from a subscriber-number memory (RSP) of a subscriber device (TE) that has an input unit (T) for entering subscriber numbers (RN) and associated additional information items (ZI), a control unit (ST) for controlling the subscriber device (TE) and an automatic dialling unit (WA) for outputting the subscriber number (RN) onto the main access line (HL), **characterized in that** the additional information item (ZI) assigned to every subscriber number (RN) contains an identifier (K) that determines the service features of the subscriber device (TE) for which the respective subscriber number (RN) can be used, said identifier (K) is stored in the subscriber-number memory (RSP) and the control unit (ST) for executing a service feature on the basis of the identifier (K) determines the subscriber number (RN) to be used and the additional information item (ZI).

2. Method for selecting a subscriber number from a subscriber-number memory (RSP) of a subscriber device (TE) that has an input unit (T) for entering subscriber numbers (RN) and associated additional information items (ZI), a control unit (ST) for controlling the subscriber device (TE) and an automatic dialling unit (WA) for outputting the subscriber number (RN) onto the main access line (HL), **characterized in that**, in selecting the service feature, the control unit (ST) reads out of a memory (LSP) assigned to the service features the address of the subscriber number (RN) that is stored in the subscriber-number memory (RSP) and that is assigned to the service feature, and the control unit (ST) then reads out the subscriber number (RN) according to the subscriber-number memory (RSP) and feeds it to the automatic dialling unit (WA) to set up the connection.

3. Method according to Claim 1 or 2, **characterized in that** there is assigned to every subscriber number (RN) at least one additional information item (ZI) that is stored together with the subscriber number (RN) in the subscriber-number memory (RSP) and the additional information item (ZI) and the selected subscriber number (RN) are displayed on the display unit (AN) of the subscriber device (TE).

## Revendications

1. Procédé de sélection d'un numéro d'appel à partir d'une mémoire de numéros d'appel (RSP) d'un appareil d'abonné (TE), qui comporte une unité d'entrée (T) en vue de l'entrée de numéros d'appel (RN) et d'informations supplémentaires associées (ZI), une unité de commande (ST) en vue de la commande de l'appareil d'abonné (TE) et un dispositif automatique de sélection (WA) en vue de la délivrance du numéro d'appel (RN) sur la ligne de raccordement principale (HL),
**caractérisé en ce que**
l'information supplémentaire (ZI) associée à chaque numéro d'appel (RN) contient une caractérisation (K), qui fixe, pour quelles caractéristiques d'exécution de l'appareil d'abonné (TE), le numéro d'appel respectif (RN) peut être utilisé, cette caractérisation (K) est mémorisée dans la mémoire de numéros d'appel (RSP) et l'unité de commande (ST) détecte en vue de la réalisation d'une caractéristique d'exécution à l'aide de la caractérisation K le numéro d'appel (RN) et l'information supplémentaire (ZI) à utiliser.

2. Procédé de sélection d'un numéro d'appel à partir d'une mémoire de numéros d'appel (RSP) d'un appareil d'abonné (TE), qui présente une unité d'entrée (T) en vue de l'entrée de numéros d'appel (RN) et d'information supplémentaire associée (ZI), une unité de commande (ST) en vue de la commande de l'appareil d'abonné (TE) et un dispositif automatique de sélection (WA) en vue de la délivrance du numéro d'appel (RN) sur la ligne de raccordement principale (HL), **caractérisé en ce que**
lors de la sélection d'une caractéristique d'exécution, l'unité de commande (SP) lit à partir d'une mémoire associée aux caractéristiques d'exécution (LSP) l'adresse du numéro d'appel (RN) mémorisé dans la mémoire de numéros d'appel (RSP), qui est associé à la caractéristique d'exécution, l'unité de commande (ST) lit ensuite le numéro d'appel (RN) selon la mémoire de numéros d'appel (RSP) et l'applique au dispositif automatique de sélection (WA) en vue de l'établissement de la liaison.

3. Procédé selon la revendication 1 ou 2, **caractérisé en ce qu'**à chaque numéro d'appel (RN) est associée au moins une information supplémentaire (ZI) qui est mémorisée conjointement avec le numéro d'appel (RN) dans la mémoire de numéros d'appel (RSP), et l'information supplémentaire (ZI) et le numéro d'appel sélectionné (RN) sont affichés sur l'unité d'affichage (AN) de l'appareil d'abonné (TE).
